# EUROPÄISCHE PATENTANMELDUNG

(11) **EP 1 798 351 A2**
(43) Veröffentlichungstag der Anmeldung: **20.06.2007**
(21) Anmeldenummer: 06022973.9
(22) Anmeldetag: 04.11.2006
(51) Int. Cl.: E03C 1/10, F16K 15/06

(54) **Rückflussverhinderer**

(30) Priorität: 15.12.2005 DE 102005062517
(71) Anmelder: Alfred Kärcher GmbH & Co. KG, 71364 Winnenden (DE)
(72) Erfinder: Friedrich, Rolf, 71364 Winnenden (DE); Hampp, Rolf, 71364 Winnenden (DE); Sommer, Harald, 71397 Leutenbach (DE)
(74) Vertreter: Hoeger, Stellrecht & Partner Patentanwälte

(57) **Zusammenfassung**

Die Erfindung betrifft einen Rückflussverhinderer mit einem Gehäuse, das eine Einlassöffnung, eine Auslassöffnung sowie eine Leckageöffnung aufweist und das ein erstes und ein zweites Rückschlagventil aufnimmt, die hintereinander angeordnet sind, wobei das erste Rückschlagventil im Gehäuse zwischen einer Freigabestellung und einer Sperrstellung hin und her verschiebbar gehalten ist und durch Verschieben des ersten Rückschlagventiles eine Strömungsverbindung zwischen einem zwischen den beiden Rückschlagventilen angeordneten Innenraum des Außengehäuses und der Leckageöffnung freigebbar bzw. absperrbar ist. Um den Rückflussverhinderer derart weiterzubilden, dass die Gefahr eines Verkantens des ersten Rückschlagventiles vermindert werden kann, wird erfindungsgemäß vorgeschlagen, dass das Ventilgehäuse außenseitig zwei im Abstand zueinander angeordnete Ringnuten aufweist, in denen jeweils ein Dichtring angeordnet ist.

## Beschreibung

Die Erfindung betrifft einen Rückflussverhinderer mit einem Gehäuse, das eine Einlassöffnung, eine Auslassöffnung sowie eine in Durchströmungsrichtung zwischen der Einlass- und der Auslassöffnung angeordnete Leckageöffnung aufweist und das ein erstes und ein zweites Rückschlagventil aufnimmt, die in Durchströmungsrichtung hintereinander angeordnet sind, wobei das erste Rückschlagventil ein Ventilgehäuse mit einem Ventilsitz sowie einen federelastisch gegen den Ventilsitz vorgespannten Schließkörper aufweist und im Gehäuse zwischen einer Freigabestellung und einer Sperrstellung hin und her verschiebbar gehalten ist und durch Verschieben des ersten Rückschlagventiles eine Strömungsverbindung zwischen einem zwischen den beiden Rückschlagventilen angeordneten Innenraum des Gehäuses und der Leckageöffnung freigebbar bzw. absperrbar ist.

Derartige Rückflussverhinderer sind aus der Patentschrift DE 103 35 379 B3 bekannt. Mit ihrer Hilfe kann sichergestellt werden, dass beim Anschluss von Reinigungsgeräten, beispielsweise Hochdruckreinigungsgeräten oder Waschmaschinen, an eine Trinkwasserversorgungsleitung verschmutzte Reinigungsflüssigkeit nicht vom Reinigungsgerät in die Trinkwasserversorgungsleitung zurückgelangen kann. Hierzu wird zwischen der Trinkwasserversorgungsleitung und dem Reinigungsgerät ein Rückflussverhinderer der eingangs genannten Art geschaltet. Dieser weist zwei hintereinander angeordnete Rückschlagventile mit identischer Schließrichtung auf, um die Rückführung der verschmutzten Reinigungsflüssigkeit in die Trinkwasserversorgungsleitung zu unterbinden.

Das erste Rückschlagventil ist im Außengehäuse verschiebbar gehalten. Nimmt das erste Rückschlagventil seine Sperrstellung ein, so wird dadurch eine Strömungsverbindung zwischen einem zwischen den beiden Rückschlagventilen angeordneten Innenraum des Gehäuses und der Leckageöffnung abgesperrt. Nimmt das erste Rückschlagventil seine Freistellung ein, so wird die Strömungsverbindung zwischen dem Innenraum und der Leckageöffnung freigegeben. Über die Leckageöffnung kann der Innenraum entleert werden, falls der Differenzdruck zwischen dem im Bereich der Einlassöffnung herrschenden Druck und dem im Bereich zwischen den beiden Rückschlagventilen herrschenden Druck einen vorgegebenen Wert unterschreitet.

Bei dem aus der DE 103 35 379 B3 bekannten Rückflussverhinderer ist das erste Rückschlagventil in einem Abschnitt des Gehäuses verschiebbar gehalten und mittels eines am stromaufwärtigen Ende des ersten Rückschlagventiles angeordneten Dichtringes gegenüber der Innenseite des Gehäuses strömungsdicht abgedichtet. Beim Hin- und Herverschieben des ersten Rückschlagventiles besteht die Gefahr, dass dieses innerhalb des Gehäuses verkantet. Dadurch wird die Verschieblichkeit des ersten Rückschlagventiles beeinträchtigt und es kann nicht mehr sichergestellt werden, dass der Einlassbereich des Außengehäuses zuverlässig gegenüber von dessen Innenraum abgedichtet ist.

Aufgabe der vorliegenden Erfindung ist es, einen Rückflussverhinderer der eingangs genannten Art derart weiterzubilden, dass die Gefahr eines Verkantens des ersten Rückschlagventiles vermindert werden kann.

Diese Aufgabe wird bei einem Rückflussverhinderer der gattungsgemäßen Art erfindungsgemäß dadurch gelöst, dass das Ventilgehäuse des ersten Rückschlagventiles außenseitig zwei in Durchströmungsrichtung im Abstand zueinander angeordnete Ringnuten aufweist, in denen jeweils ein Dichtring angeordnet ist.

Durch die Bereitstellung von zwei im Abstand zueinander angeordneten Dichtringen, die am Ventilgehäuse des ersten Rückschlagventiles gehalten sind, wird die Gefahr eines Verkantens des ersten Rückschlagventiles ganz erheblich vermindert. Die Dichtringe sind in radialer Richtung wirksam und stützen das Ventilgehäuse des ersten Rückschlagventiles zur Sicherstellung einer ungehinderten Verschieblichkeit in radialer Richtung ab. Mittels des stromaufwärtigen Dichtringes kann außerdem der Einlassbereich des Außengehäuses zuverlässig gegenüber dem Bereich der Leckageöffnung abgedichtet werden.

Von Vorteil ist es, wenn eine erste Ringnut in einem stromaufwärtigen Endbereich und die zweite Ringnut in einem stromabwärtigen Endbereich des Ventilgehäuses des ersten Rückschlagventiles angeordnet sind. Die beiden Ringnuten weisen bei einer derartigen Ausführungsform einen möglichst großen Abstand zueinander auf und durch die in den Ringnuten angeordneten Dichtringe kann das Ventilgehäuse zur Vermeidung eines Verkantens optimal ausgerichtet werden.

Günstig ist es, wenn die beiden Dichtringe profiliert sind, sie können beispielsweise ein U-förmiges Profil aufweisen. Dadurch kann die radiale Dichtwirkung der Dichtringe verbessert werden.

Von besonderem Vorteil ist es, wenn die beiden Dichtringe jeweils eine Dichtlippe ausbilden, denn dadurch kann eine besonders wirksame Abdichtfunktion erzielt werden.

Vorzugsweise weisen die beiden Dichtringe denselben Außendurchmesser auf.

Bei einer besonders bevorzugten Ausführungsform ist der stromabwärtige Dichtring in der Sperrstellung des ersten Rückschlagventiles von einer Dichtfläche umgeben, an der er unter Ausbildung eines ringförmigen, geschlossenen Dichtbereiches anliegt. Der stromabwärtige Dichtring übernimmt bei einer derartigen Ausgestaltung nicht nur die Funktion, ein Verkanten des ersten Rückschlagventiles bei dessen Verschiebebewegung zu verhindern, sondern zusätzlich kann mittels des stromabwärtigen Dichtringes in der Sperrstellung des ersten Rückschlagventiles die Strömungsverbindung zwischen dem Innenraum des Gehäuses und der Leckageöffnung unterbrochen werden.

Von besonderem Vorteil ist es, wenn der Rückflussverhinderer einen zylindermantelförmigen Führungsabschnitt aufweist, in dem das erste Rückschlagventil verschiebbar gehalten ist, und wenn die Dichtfläche zylindermantelförmig ausgestaltet ist, wobei der Innendurchmesser des Führungsabschnittes identisch ist mit dem Innendurchmesser der Dichtfläche. Führungsabschnitt und Dichtfläche sind bei einer derartigen Ausgestaltung koaxial zueinander ausgerichtet, so dass sich in der Sperrstellung des ersten Rückschlagventiles der stromabwärtige Dichtring an die Dichtfläche und der stromaufwärtige Dichtring am Führungsabschnitt abdichtend anliegen kann. Geht das erste Rückschlagventil in seine Freigabestellung über, so kann der stromabwärtige Dichtring in den im Abstand zur Dichtfläche angeordneten Führungsabschnitt eintauchen

Um den Übergang des ersten Rückschlagventiles in seine Sperrstellung zu vereinfachen, grenzt bei einer bevorzugten Ausführungsform stromaufwärts an die Dichtfläche eine sich in Durchströmungsrichtung verengende Anlagefläche an. Die Anlagefläche bildet eine Führung für den stromabwärtigen Endbereich und den an diesem angeordneten Dichtring aus, so dass dieser in der Sperrstellung des ersten Rückschlagventiles optimal an der Dichtfläche positioniert werden kann. Die Anlagefläche ist bevorzugt konisch ausgestaltet.

Ist der Rückflussverhinderer einerseits an eine Trinkwasserversorgungsleitung und andererseits an ein Reinigungsgerät, insbesondere ein Hochdruckreinigungsgerät, angeschlossen, so nimmt während des Betriebes des Reinigungsgerätes das erste Rückschlagventil seine Sperrstellung ein und beide Rückschlagventile sind geöffnet, so dass der Rückflussverhinderer von Trinkwasser durchströmt werden kann. Wird anschließend das Reinigungsgerät abgeschaltet, so schließen die beiden Rückschlagventile und das erste Rückschlagventil verbleibt aufgrund des im Einlassbereich des Rückflussverhinderers weiterhin wirkenden Wasserdruckes in seiner Sperrstellung. Weist das erste Rückschlagventil eine Undichtigkeit auf, beispielsweise aufgrund einer Beschädigung von seinem Ventilsitz, so dringt trotz der geschlossenen Stellung des ersten Rückschlagventiles im Laufe der Zeit Wasser in den Innenraum zwischen den beiden Rückschlagventilen ein, so dass sich dort der Druck erhöht. Bei Unterschreiten eines vorgegebenen Differenzdruckes zwischen dem im Bereich der Einlassöffnung herrschenden Druck und dem im Bereich zwischen den beiden Rückschlagventilen herrschenden Druck geht dann das erste Rückschlagventil selbsttätig in seine Freigabestellung über, so dass der Innenraum des Gehäuses zwischen den beiden Rückschlagventilen schlagartig über die Leckageöffnung entleert werden kann. Dies führt zu einem Druckabfall im Innenraum des Gehäuses, der wiederum zur Folge hat, dass das erste Rückschlagventil öffnet. Es kann dann ungehindert bei abgeschaltetem Reinigungsgerät Wasser mit großer Strömungsrate von der Trinkwasserversorgungsleitung zur Leckageöffnung gelangen und aus dem Rückflussverhinderer herausströmen.

Um bei einer Undichtigkeit des ersten Rückschlagventiles das Ausströmen von Wasser mit großer Strömungsrate zu verhindern, weist die stromaufwärts an die Dichtfläche angrenzende Anlagefläche bei einer bevorzugten Ausführungsform zumindest eine sich in Umfangsrichtung über einen Teilbereich der Anlagefläche erstreckende Ausnehmung auf. Verschiebt sich einer derartigen Ausführungsform das erste Rückschlagventil ausgehend von seiner Sperrstellung in Richtung auf seine Freigabestellung, weil sich der Druck im Innenraum des Gehäuses aufgrund einer Undichtigkeit des ersten Rückschlagventiles allmählich erhöht, so gelangt der in der Sperrstellung an der Dichtfläche strömungsdicht anliegende Dichtring allmählich in den Bereich der Anlagefläche des Einführungsabschnittes. Die Anlagefläche weist mindestens eine Ausnehmung auf, durch die der vom stromabwärtigen Dichtring ausgebildete Dichtbereich unterbrochen wird. Im Bereich dieser Dichtunterbrechung kann dann Wasser aus dem Innenraum des Außengehäuses mit geringer Strömungsrate, beispielsweise mit einer Strömungsrate von circa 30 Liter pro Stunde, zur Leckageöffnung gelangen. Diese geringer Strömungsrate reicht in der Regel aus, um eine weitere Druckerhöhung im Innenraum des Gehäuses bei einer Undichtigkeit des ersten Rückschlagventiles zu vermeiden. Eine weitere Verschiebebewegung des ersten Rückschlagventiles in Richtung auf dessen Freigabestellung wird dadurch unterbunden, das erste Rückschlagventil verharrt vielmehr in der durch die Positionierung des stromabwärtigen Dichtringes an der Anlagefläche vorgegebenen Zwischenstellung. In dieser Zwischenstellung ist die Strömungsverbindung zwischen dem Innenraum des Gehäuses zwischen den beiden Rückschlagventilen und der Leckageöffnung in durch die Größe der Ausnehmung vorbestimmter Weise zur Vermeidung einer unzulässigen Druckerhöhung im Innenraum des Gehäuses teilweise freigegeben. Wird zu einem späteren Zeitpunkt das an den Rückflussverhinderer angeschlossene Reinigungsgerät wieder eingeschaltet, so geht das erste Rückschlagventil in seine Sperrstellung über und beide Rückschlagventile öffnen, so dass der Rückflussverhinderer wieder von Wasser durchströmt werden kann.

Günstig ist es, wenn die Anlagefläche des Einführungsabschnittes mehrere, in gleichmäßigem Abstand zueinander angeordnete Ausnehmungen aufweist, denn dies ermöglicht einen über den Umfang der Anlagefläche gleichmäßig verteilten Abfluss des Wassers aus dem Innenraum des Gehäuses zur Leckageöffnung.

Bei einer besonders bevorzugten Ausführungsform des erfindungsgemäßen Rückflussverhinderers umfasst das zweite Rückschlagventil ein Ventilgehäuse, das eine Ausnehmung aufweist, in die das Ventilgehäuse des ersten Rückschlagventils in dessen Sperrstellung eintaucht und die die Dichtfläche ausbildet. Eine derartige Ausgestaltung ist insbesondere dann von Vorteil, wenn das zweite Rückschlagventil im Außengehäuse zwischen einer hinteren und einer vorderen Endstellung hin und her verschiebbar ist. Dies ermöglicht es, beim Auftreten einer Druckspitze im Auslassbereich des Außengehäuses das zweite Rückschlagventil und das in der Sperrstellung an diesem anliegende erste Rückschlagventil entgegen der Durchströmungsrichtung des Rückflussverhinderers zu verschieben, um die Druckspitze abzubauen.

Von Vorteil ist es, wenn die Ausnehmung des Ventilgehäuses des zweiten Rückschlagventils auch die voranstehend genannte Anlagefläche ausbildet, so dass das Eintauchen des Ventilgehäuses des ersten Rückschlagventils in die Aufnahme vereinfacht wird.

Bei einer vorteilhaften Ausführungsform ist das zweite Rückschlagventil in seiner vorderen und seiner hinteren Endstellung jeweils an eine Anschlagfläche anlegbar. Günstig ist es hierbei, wenn stromaufwärts an die Anlagefläche ein Kragen angrenzt, der zumindest einen radialen Durchlass aufweist und der in der hinteren Endstellung des zweiten Rückschlagventiles an einer Anschlagfläche anliegt. Als Anschlagfläche kann beispielsweise die Stirnfläche eines Gehäuseteils des Rückflussverhinderers zum Einsatz kommen. Durch den mindestens eine radiale Durchbrechung aufweisenden Kragen ist sichergestellt, dass in der Freigabestellung des ersten Rückschlagventiles auch dann eine Strömungsverbindung zwischen dem Innenraum des Gehäuses und der Leckageöffnung besteht, wenn das zweite Rückschlagventil seine hintere Endstellung einnimmt.

Die nachfolgende Beschreibung einer bevorzugten Ausführungsform der Erfindung dient im Zusammenhang mit der Zeichnung der näheren Erläuterung. Es zeigen:
- Figur 1:: eine Längsschnittansicht eines erfindungsgemäßen Rückflussverhinderers im unbelasteten Zustand;
- Figur 2:: eine Längsschnittansicht entsprechend Figur 1 beim Durchströmen des Rückflussverhinderers mit Flüssigkeit und
- Figur 3:: eine Längsschnittansicht entsprechend Figur 1 bei einseitiger Druckbeaufschlagung im Bereich einer Einlassöffnung des Rückflussverhinderers und undichtem ersten Rückschlagventil.

In der Zeichnung ist ein Rückflussverhinderer 10 dargestellt mit einem Gehäuse 11, das ein erstes Gehäuseteil 12 und ein zweites Gehäuseteil 13 aufweist, die in der dargestellten Ausführungsform miteinander verschraubt sind. Das Gehäuse 11 definiert einen Strömungskanal, der eine Einlassöffnung 15 im ersten Gehäuseteil 12 mit einer Auslassöffnung 16 im zweiten Gehäuseteil 13 verbindet. In Durchströmungsrichtung 18 ungefähr mittig zwischen der Einlassöffnung 15 und der Auslassöffnung 16 weist das Gehäuse 11 zumindest eine, vorzugsweise mehrere über den Umfang des Gehäuses 12 verteilte Leckageöffnungen 19 auf.

Das erste Gehäuseteil 12 ist als Rohrleitungsabschnitt ausgebildet und umfasst einen sich an die Einlassöffnung 15 anschließenden Einlasskanal 21, an den sich über eine Stufe 22 ein zylindermantelförmiger Führungsabschnitt 23 anschließt. Der Einlasskanal 21 trägt im Bereich der Einlassöffnung 15 ein Außengewinde 25 zum Anschluss des Rückflussverhinderers 10 an eine Trinkwasserversorgungsleitung, und der Führungsabschnitt 23 weist der Einlassöffnung 15 abgewandt eine Stirnfläche 26 auf, deren Flächennormale parallel zur Durchströmungsrichtung 18 ausgerichtet ist.

Das zweite Gehäuseteil 13 ist ebenfalls als Rohrleitungsabschnitt ausgebildet und umfasst einen in die Auslassöffnung 16 einmündenden Auslasskanal 28 mit einem Innengewinde 29. Mit Hilfe des Innengewindes 29 kann der Rückflussverhinderer 10 auslassseitig beispielsweise an ein Reinigungsgerät, insbesondere an ein Hochdruckreinigungsgerät, angeschlossen werden. An den Auslasskanal 28 schließt sich entgegen der Durchströmungsrichtung 18 ein radial nach innen gerichteter Bund 31 an sowie ein Aufnahmeabschnitt 32, der über eine Stufe 33 in einen Führungsabschnitt 34 übergeht. An seinem freien Endbereich weist der Führungsabschnitt 34 des zweiten Gehäuseteiles 13 ein Innengewinde auf zum Verschrauben des zweiten Gehäuseteiles 13 mit dem ersten Gehäuseteil 12. Dem Innengewinde benachbart sind im Führungsabschnitt 34 die Leckageöffnungen 19 angeordnet.

Das Gehäuse 11 nimmt ein erstes Rückschlagventil 37 und ein zweites Rückschlagventil 39 auf, die in Durchströmungsrichtung 18 hintereinander angeordnet sind. Das erste Rückschlagventil 37 ist im Bereich des Führungsabschnittes 23 des ersten Gehäuseteils 12 angeordnet und umfasst ein becherförmiges Ventilgehäuse 41 mit einem Ventilgehäusemantel 42 und einem Ventilgehäuseobden 43. Letzterer weist eine Durchlassöffnung 45 auf, an die sich in Durchströmungsrichtung 18 ein sich konisch erweiternder Ventilsitz 46 anschließt. Der Ventilgehäusemantel 42 weist außenseitig eine erste Ringnut 48 und eine zweite Ringnut 49 auf, die ein erstes Dichtungselement in Form eines ersten profilierten Dichtringes 51 bzw. ein zweites Dichtungselement in Form eines zweiten profilierten Dichtringes 52 aufnehmen. Die erste Ringnut 48 ist bezogen auf die Durchströmungsrichtung 18 in einem hinteren Endbereich und die zweite Ringnut 49 ist in einem bezogen auf die Durchströmungsrichtung 18 vorderen Endbereich des Ventilgehäusemantels 42 angeordnet. Die beiden Dichtringe 51 und 52 weisen jeweils eine Dichtlippe 53 bzw. 54 auf, wobei die Dichtlippe 53 unabhängig von der Stellung des ersten Rückschlagventiles 37 an der Innenseite des Führungsabschnittes 23 des ersten Gehäuseteiles 12 unter Ausbildung einer kreisförmigen Dichtlinie anliegt.

Das Ventilgehäuse 41 umgibt einen Schließkörper in Form eines Ventilkolbens 56, der eine konische Dichtfläche 57 aufweist, an die sich in Durchströmungsrichtung 18 ein den Ventilkolben 56 in Umfangsrichtung umgebender O-Ring 58 anschließt. Der Einlassöffnung 15 zugewandt trägt der Ventilkolben 56 vier senkrecht zueinander ausgerichtete Führungsrippen 59, die die Durchlassöffnung 45 durchgreifen und in dieser gleitend geführt sind. Den Führungsrippen 59 abgewandt trägt der Ventilkolben 56 einen Führungsstift 60, der von einer Schließfeder 61 umgeben ist.

Das zweite Rückschlagventil 39 weist ein Ventilgehäuse 64 auf, das einen sich in Durchströmungsrichtung 18 entsprechend der Stufe 33 stufig verengenden Ventilgehäusemantel 65 mit einem hinteren Mantelabschnitt 66 und einem vorderen Mantelabschnitt 67 umfasst. Der hintere Mantelabschnitt 66 ist im Führungsabschnitt 34 des zweiten Gehäuseteiles 13 geführt und geht über eine stufige Verengung 68 in den vorderen Mantelabschnitt 67 über, der im Bereich des Aufnahmeabschnittes 32 gleitend geführt ist und der außenseitig eine Ringnut 69 aufweist, in der ein profilierter Dichtring 70 angeordnet ist. Letzterer bildet eine Dichtlippe 71 aus, die an der Innenseite des Aufnahmeabschnittes 32 strömungsdicht anliegt.

An den vorderen Mantelabschnitt 67 schließt sich ein Ventilgehäuseboden 72 an mit einer zentralen Durchlassöffnung 73, die sich in Durchströmungsrichtung 18 über einen konischen Ventilsitz 74 erweitert.

In Durchströmungsrichtung 18 schließt sich an das Ventilgehäuse 64 des zweiten Rückschlagventiles 39 eine Stützhülse 76 an, die mit dem Ventilgehäuse 64 verrastet ist und im Abstand zur Durchlassöffnung 73 vier senkrecht zueinander ausgerichtete Stützarme 77 trägt, die mit einer koaxial zur Durchlassöffnung 73 ausgerichteten Führungshülse 78 einstückig verbunden sind.

Das zweite Rückschlagventil 39 weist außerdem einen Schließkörper in Form eines Ventilkolbens 81 auf, der identisch ausgestaltet ist wie der Ventilkolben 56 des ersten Rückschlagventiles 37 und eine konische Dichtfläche 82 aufweist, an die sich in Durchströmungsrichtung 18 ein den Ventilkolben 81 in Umfangsrichtung umgebender O-Ring 83 anschließt. Der Einlassöffnung 15 zugewandt trägt der Ventilkolben 81 vier senkrecht zueinander ausgerichtete Führungsrippen 84, die in der Durchlassöffnung 73 des Ventilgehäuses 64 gleitend geführt sind. Der Einlassöffnung 15 abgewandt trägt der Ventilkolben 81 einen Führungsstift 85, der die Führungshülse 78 durchgreift und von einer Schließfeder 86 umgeben ist, die sich einerseits am Ventilkolben 81 und andererseits an den Stützarmen 77 abstützt.

Das zweite Rückschlagventil 39 bildet mit seinem Ventilgehäuse 64 eine Führung aus für den Führungsstift 60 des ersten Rückschlagventiles 37. Hierzu taucht der Führungsstift 60 in eine koaxial zur Durchlassöffnung 45 des ersten Rückschlagventiles 37 ausgerichtete Führungshülse 89 ein, die an das Ventilgehäuse 64 des zweiten Rückschlagventiles 39 angeformt ist. Die den Führungsstift 60 umgebende Schließfeder 61 stützt sich einerseits am Ventilgehäuse 41 des ersten Rückschlagventiles 37 und andererseits am Ventilgehäuse 64 des zweiten Rückschlagventiles 39 ab.

Der Durchströmungsrichtung 18 entgegengerichtet schließt sich an den hinteren Mantelabschnitt 66 des Ventilgehäusemantels 65 des zweiten Rückschlagventiles 39 ein in Richtung auf das erste Gehäuseteil 12 ausgerichteter Kragen 91 an, dessen Innendurchmesser größer ist als der Außendurchmesser des Ventilgehäusemantels 42 des ersten Rückschlagventiles 37. Der Kragen 91 definiert in Kombination mit dem hinteren Mantelabschnitt 66 eine Aufnahme 93, die sich vom Kragen 91 über eine sich in Durchströmungsrichtung 18 konisch verjüngende Anlagefläche 94 und eine sich an diese anschließende zylindermantelförmige Dichtfläche 95 bis zu einer Anschlagfläche 96 erstreckt, deren Flächennormale parallel zur Durchströmungsrichtung 18 ausgerichtet ist. Die Anlagefläche 94 weist mehrere, in Umfangsrichtung in gleichmäßigem Abstand zueinander angeordnete Vertiefungen oder Ausnehmungen 98 auf, an die sich im Bereich des Kragens 91 Schlitze 99 anschließen, die sich bis an die freie Stirnseite des Kragens 91 erstrecken.

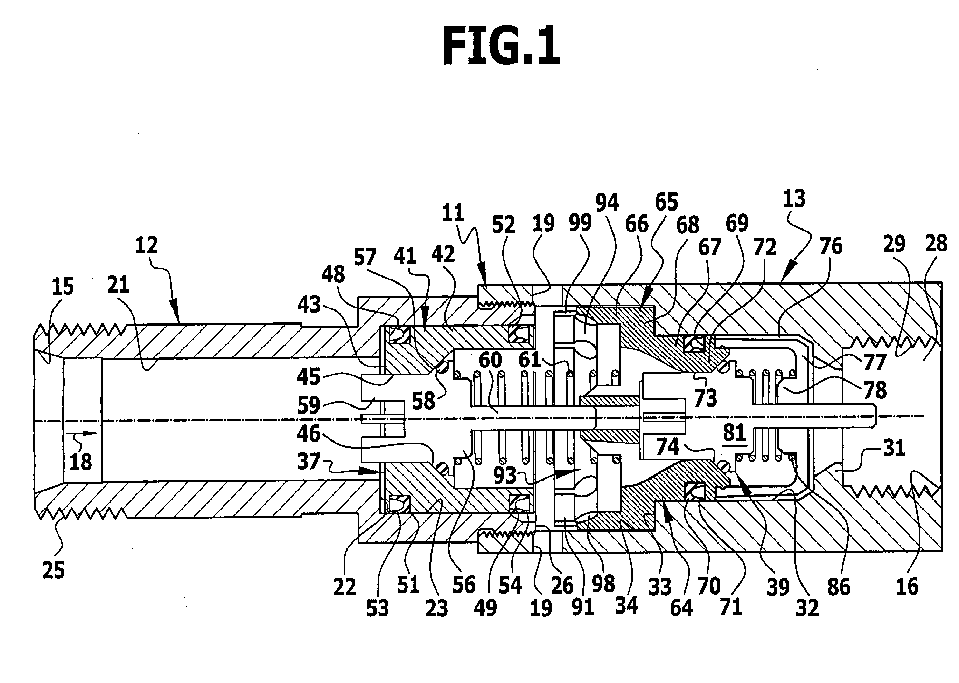

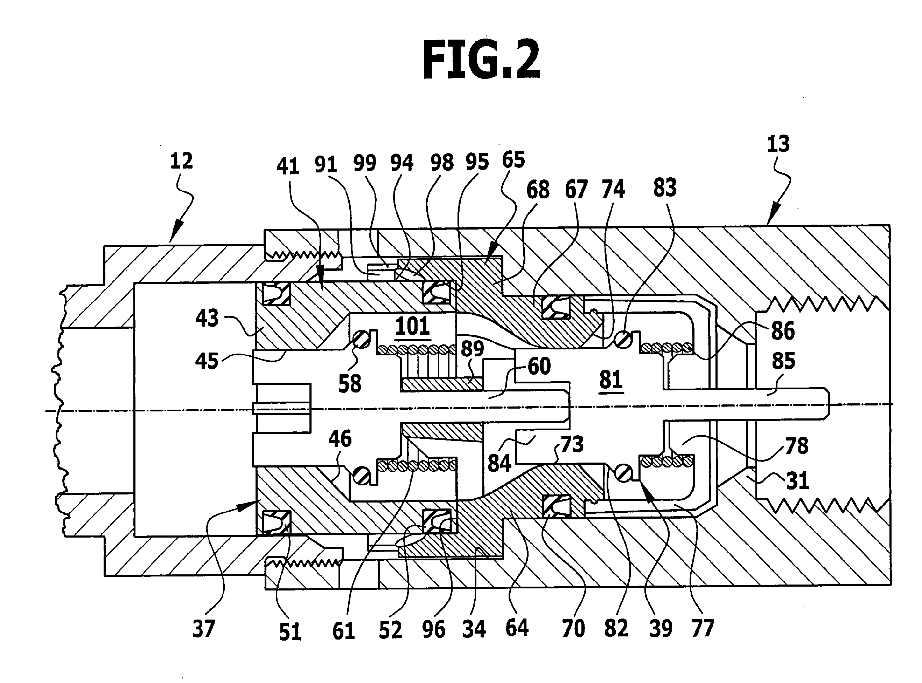

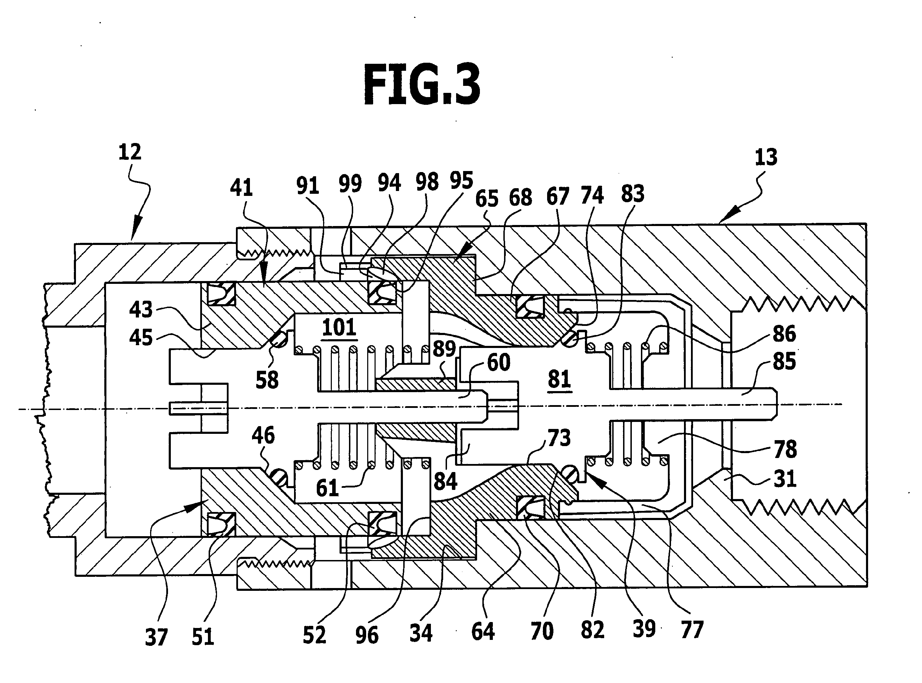

Sowohl das erste Rückschlagventil 37 als auch das zweite Rückschlagventil 39 sind im Gehäuse 11 in Durchströmungsrichtung hin und her verschiebbar gehalten. Das erste Rückschlagventil 37 kann hierbei zwischen einer in Figur 1 dargestellten Freigabestellung, in der der Ventilgehäuseboden 43 an der Stufe 22 des ersten Gehäuseteiles 12 anliegt, und einer in Figur 2 dargestellten Sperrstellung, in der der freie Endbereich des Ventilgehäusemantels 42 in die Aufnahme 93 eintaucht, wobei der zweite Dichtring 52 mit seiner Dichtlippe 54 unter Ausbildung einer kreisförmigen Dichtlinie an der Dichtfläche 95 anliegt, hin und her verschoben werden. Das erste Rückschlagventil 37 weist in geringfügigem Abstand zu der in Figur 2 dargestellten Sperrstellung noch eine Figur 3 dargestellte Zwischenstellung auf, in der der zweite Dichtring 52 in Höhe der Anlagefläche 94 positioniert ist. In diesem Falle bildet der zweite Dichtring 52 eine von den Ausnehmungen 98 unterbrochene Dichtlinie aus.

Das zweite Rückschlagventil 39 kann zwischen der in den Figuren 1, 2 und 3 dargestellten vorderen Endstellung, in der es an der Stufe 33 des zweiten Gehäuseteiles 13 anliegt, und einer in der Zeichnung nicht dargestellten hinteren Endstellung, in der der Kragen 91 an der Stirnfläche 26 des ersten Gehäuseteiles 12 anliegt, hin und her verschoben werden.

Im unbelasteten Zustand, in dem weder der Bereich der Einlassöffnung 15 noch der Bereich der Auslassöffnung 16 mit Druck beaufschlagt ist, nimmt der Rückflussverhinderer 10 die in Figur 1 dargestellte Stellung ein, in der die beiden Rückschlagventile 37 und 39 geschlossen sind, das heißt die Ventilkolben 56 und 81 liegen mit ihren O-Ringen 58 bzw. 83 an den korrespondierenden Ventilsitzen 46 bzw. 74 an. Außerdem nimmt das erste Rückschlagventil 37 in diesem Zustand seine Freigabestellung ein, so dass eine Strömungsverbindung besteht von einem zwischen den beiden Rückschlagventilen 37 und 39 angeordneten Innenraum 101 des Gehäuses 11 und den Leckageöffnungen 19, und das zweite Rückschlagventil 39 nimmt seine bereits erläuterte vordere Endstellung ein.

An die Einlassöffnung 15 kann eine Trinkwasserversorgungsleitung und an die Auslassöffnung 16 kann ein Hochdruckreinigungsgerät angeschlossen werden, so dass der Rückflussverhinderer 10 von Wasser durchströmt werden kann.

Hierbei wird das erste Rückschlagventil 37 aufgrund des im Bereich des Einlasskanals 21 herrschenden Wasserdruckes in Durchströmungsrichtung 18 nach vorne verschoben bis der zweite Dichtring 52 strömungsdicht an der Dichtfläche 95 anliegt, so dass das erste Rückschlagventil 37 seine Sperrstellung einnimmt. Durch die Bereitstellung der beiden im Abstand zueinander angeordneten Radialdichtungen in Form der Dichtringe 51 und 52, die am Ventilgehäuse 41 gehalten sind, ist eine gute Verschieblichkeit des ersten Rückschlagventiles 37 gewährleistet, insbesondere besteht praktisch keine Gefahr, dass das erste Rückschlagventil 37 verkantet.

In der Sperrstellung des ersten Rückschlagventiles 37 ist die Strömungsverbindung zwischen dem Innenraum 101 und den Leckageöffnungen 19 aufgrund der dichten Anlage des Dichtringes 52 an der Dichtfläche 95 unterbrochen. Außerdem gehen die beiden Rückschlagventile 37 und 39 in ihre geöffnete Stellung über, in der die Ventilkolben 56 bzw. 81 im Abstand zu den zugeordneten Ventilsitzen 46 bzw. 74 positioniert sind, so dass die Rückschlagventile 37 und 39 von Wasser durchströmt werden können. Dieser Zustand ist in Figur 2 dargestellt.

Wird anschließend das Hochdruckreinigungsgerät abgeschaltet, so schließen zwar die beiden Rückschlagventile 37 und 39, bei im Einlasskanal 21 weiterhin herrschenden Wasserdruck behalten sie aber ihre aktuellen Positionen bei, insbesondere verbleibt das erste Rückschlagventil 37 in seiner Sperrstellung. Kommt es in diesem Zustand zu einer Undichtigkeit des ersten Rückschlagventiles 37, beispielsweise weil der O-Ring 58 beschädigt ist, so strömt im Laufe der Zeit eine gewisse Menge von Wasser durch das geschlossene erste Rückschlagventil 37 hindurch in den Innenraum 101. Dies hat zur Folge, dass sich im Innenraum 101 der Wasserdruck erhöht und folglich unter Mitwirkung der Schließfeder 61 das erste Rückschlagventil 37 entgegen der Durchströmungsrichtung 18 verschoben wird. Eine derartige Verschiebebewegung hat zur Folge, dass der zweite Dichtring 52 ausgehend von der Dichtfläche 95 die Anlagefläche 94 erreicht, in der aufgrund der Ausnehmungen 98 keine strömungsdichte Anlage des Dichtringes 52 an der Anlagefläche 94 gewährleitet ist. Vielmehr ist durch die Bereitstellung der Ausnehmungen 98 die Strömungsverbindung zwischen dem Innenraum 101 und den Leckageöffnungen 19 in vorgegebener Weise so weit freigegeben, dass Wasser mit einer geringen Strömungsrate, beispielsweise mit einer Strömungsrate von 30 Liter pro Stunde, aus dem Innenraum 101 über die Ausnehmungen 98 zu den Leckageöffnungen 19 gelangen kann. Dadurch wird eine weitere Verschiebung des ersten Rückschlagventiles 37 in Richtung der Freigabestellung und damit ein plötzlicher Druckabfall im Innenraum 101 aufgrund der dann vorliegenden Strömungsverbindung zur Leckageöffnung vermieden. Ein derartiger Druckabfall hätte nämlich zur Folge, dass das erste Rückschlagventil 37 öffnet, sich also der Ventilkolben 56 mit seinem O-Ring 58 vom korrespondierenden Ventilsitz 46 abhebt und dadurch dem Rückflussverhinderer 10 über den Einlasskanal 21 zugeführtes Wasser mit großer Strömungsrate, beispielsweise mit einer Strömungsrate von 3000 Liter pro Stunde, durch das erste Rückschlagventil 37 hindurch zu den Leckageöffnungen 19 strömen könnte. Es wird also unter Inkaufnahme einer verhältnismäßig kleinen Leckage bei einer Undichtigkeit des ersten Rückschlagventiles 37 ein intensives Ausströmen von Wasser verhindert.

Kommt es beim Abschalten des an die Auslassöffnung 16 angeschlossenen Hochdruckreinigungsgerätes kurzfristig zu einer Druckerhöhung im Bereich der Auslassöffnung 16, so kann diese Druckerhöhung zuverlässig dadurch abgefangen werden, dass sich das zweite Rückschlagventil 39 entgegen der Druchströmungsrichtung 18 verschiebt, ohne dass dadurch die Verschiebbarkeit des ersten Rückschlagventiles zwischen seiner Freigabestellung, seiner Sperrstellung und seiner Zwischenstellung beeinträchtigt ist. Selbst wenn das zweite Rückschlagventil 39 mit seinem Kragen 91 an der Stirnfläche 26 des ersten Gehäuesteiles 12 anliegt, ist über die in den Kragen 91 eingeformten Schlitze 99, die sich an die Ausnehmungen 98 anschließen, gewährleistet, dass in der Zwischenstellung des ersten Rückschlagventiles 37 Wasser mit geringer Strömungsrate aus dem Innenraum 101 zu den Leckageöffnungen 19 gelangen kann.

## Patentansprüche

1. Rückflussverhinderer mit einem Gehäuse, das eine Einlassöffnung, eine Auslassöffnung sowie eine in Durchströmungsrichtung zwischen der Einlass- und der Auslassöffnung angeordnete Leckageöffnung aufweist und das ein erstes und ein zweites Rückschlagventil aufnimmt, die in Durchströmungsrichtung hintereinander angeordnet sind, wobei das erste Rückschlagventil ein Ventilgehäuse mit einem Ventilsitz sowie einen federelastisch gegen den Ventilsitz vorgespannten Schließkörper aufweist und im Gehäuse zwischen einer Freigabestellung und einer Sperrstellung hin und her verschiebbar gehalten ist und durch Verschieben des ersten Rückschlagventiles eine Strömungsverbindung zwischen einem zwischen den beiden Rückschlagventilen angeordneten Innenraum des Gehäuses und der Leckageöffnung freigebbar bzw. absperrbar ist, **dadurch gekennzeichnet, dass** das Ventilgehäuse (42) außenseitig zwei in Durchströmungsrichtung (18) im Abstand zueinander angeordnete Ringnuten (48, 49) aufweist, in denen jeweils ein Dichtring (51, 52) angeordnet ist.

2. Rückflussverhinderer nach Anspruch 1, **dadurch gekennzeichnet, dass** eine erste Ringnut (48) in einem stromaufwärtigen Endbereich und eine zweite Ringnut (49) in einem stromabwärtigen Endbereich des Ventilgehäuses des ersten Rückschlagventiles (37) angeordnet ist.

3. Rückflussverhinderer nach Anspruch 1 oder 2, **dadurch gekennzeichnet, dass** die beiden Dichtringe (51, 52) profiliert sind.

4. Rückflussverhinderer nach Anspruch 1, 2 oder 3, **dadurch gekennzeichnet, dass** die beiden Dichtringe (51, 52) jeweils eine Dichtlippe (53, 54) aufweisen.

5. Rückflussverhinderer nach einem der voranstehenden Ansprüche, **dadurch gekennzeichnet, dass** die beiden Dichtringe (51, 52) denselben Außendurchmesser aufweisen.

6. Rückflussverhinderer nach einem der Ansprüche 2 bis 5, **dadurch gekennzeichnet, dass** der stromabwärtige Dichtring (52) in der Sperrstellung des ersten Rückschlagventiles (37) von einer Dichtfläche (95) umgeben ist, an der er unter Ausbildung eines ringförmigen, geschlossenen Dichtbereiches anliegt.

7. Rückflussverhinderer nach Anspruch 6, **dadurch gekennzeichnet, dass** der Rückflussverhinderer (10) einen zylindermantelförmigen Führungsabschnitt (23) aufweist, in dem das erste Rückschlagventil (37) verschiebbar gehalten ist, und dass die Dichtfläche (95) zylindermantelförmig ausgestaltet ist, wobei der Innendurchmesser des Führungsabschnittes (23) identisch ist mit dem Innendurchmesser der Dichtfläche (95).

8. Rückflussverhinderer nach Anspruch 7, **dadurch gekennzeichnet, dass** stromaufwärts an die Dichtfläche (95) eine sich in Durchströmungsrichtung (18) verengende Anlagefläche (94) angrenzt.

9. Rückflussverhinderer nach Anspruch 8, **dadurch gekennzeichnet, dass** die Anlagefläche (94) zumindest eine sich in Umfangsrichtung über einen Teilbereich der Anlagefläche (94) erstreckende Ausnehmung (98) aufweist.

10. Rückflussverhinderer nach Anspruch 9, **dadurch gekennzeichnet, dass** die Anlagefläche (94) mehrere, in gleichmäßigem Abstand zueinander angeordnete Ausnehmungen (98) aufweist.

11. Rückflussverhinderer nach einem der Ansprüche 1 bis 10, **dadurch gekennzeichnet, dass** das zweite Rückschlagventil (39) ein Ventilgehäuse (64) aufweist, das eine Aufnahme (93) aufweist, in die das Ventilgehäuse (41) des ersten Rückschlagventils (37) in dessen Sperrstellung eintaucht und die die Dichtfläche (95) ausbildet.

12. Rückflussverhinderer nach Anspruch 11, **dadurch gekennzeichnet, dass** die Aufnahme (93) eine Anlagefläche (94) ausbildet, die stromaufwärts an die Dichtfläche (95) angrenzt und sich in Durchströmungsrichtung (18) verengt.

13. Rückflussverhinderer nach Anspruch 12, **dadurch gekennzeichnet, dass** das zweite Rückschlagventil (39) im Außengehäuse (11) zwischen einer hinteren und einer vorderen Endstellung hin und her verschiebbar gehalten ist, und das stromaufwärts an die Anlagefläche (94) ein Kragen (91) angrenzt, der zumindest eine radiale Durchbrechung (99) aufweist und der in der hinteren Endstellung des zweiten Rückschlagventils an einem Anschlag (26) anliegt.
